# EUROPEAN PATENT APPLICATION

(11) **EP 3 986 045 A1**
(43) Date of publication of application: **20.04.2022**
(21) Application number: 19935441.6
(22) Date of filing: 27.06.2019
(51) Int. Cl.: H04W 72/00, H04W 88/02

(54) **METHOD FOR REPORTING UE CAPABILITY INFORMATION, AND COMMUNICATION APPARATUS AND COMMUNICATION SYSTEM**

(71) Applicant: Huawei Technologies Co., Ltd., Longgang Shenzhen, Guangdong 518129 (CN)
(72) Inventor: HAN, Lei, Shenzhen, Guangdong 518129 (CN)
(74) Representative: Körber, Martin Hans
(86) International application number: PCT/CN2019/093143
(87) International publication number: WO 2020/258113

(57) **Abstract**

This application provides a method and communication apparatus for reporting UE capability information, and a communication system. Through key value learning or at delivery, a UE prestores a key value and an encoded data stream, and records a correspondence between the stored key value and encoded data stream, so that when reporting UE capability information, the UE can directly query the stored key value. If the UE can find a matched key value, the UE directly reports a stored data stream to a network device without performing a complex and time-consuming process such as filtering and encoding, thereby helping reduce a latency in reporting the UE capability information by the UE. In addition, the UE capability information is usually reported when the UE enters a connected state from an idle state. Therefore, due to the reduction in the reporting latency, a connection can be quickly established between the UE and the network device, and a service can be quickly established, thereby improving user experience.

## Description

### TECHNICAL FIELD

This application relates to the field of wireless communication technologies, and in particular, to a method and communication apparatus for reporting UE capability information, and a communication system.

### BACKGROUND

In the process of accessing a network, a terminal device needs to report a capability of the terminal device to a network device. The terminal device may include a plurality of capabilities in different aspects, and one of the capabilities is a capability of the terminal device to support a band combination. The capability to support a band combination reflects a band combination supported by hardware of the terminal device. Currently, the band combination supported by the terminal device mainly relates to band combinations in carrier aggregation (CA) and dual connectivity (DC) scenarios. After knowing the capability of the terminal device to support a band combination, the network device may configure and schedule, through an algorithm of the network device based on traffic status, load status, and the like of the network, the terminal device to activate CA or DC, so that a higher bandwidth can be provided for data transmission of the terminal device.

Currently, the terminal device usually can support a plurality of bands. If a terminal device supports more bands, the terminal device may support more band combinations. Especially when a terminal device has a relatively high specification, the terminal device supports a very large quantity of band combinations. For example, in the CA scenario, release 14 (R14) of long term evolution (LTE) defines at least 50 bands and at least 1000 CA band combination types. A terminal device may support hundreds of band combinations ormore.

When reporting UE capability information to the network device, the terminal device may directly report all band combinations supported by the terminal device. Alternatively, because the hardware of the terminal device supports a very large quantity of band combinations, as an optimized solution, the terminal device performs filtering processing on all the band combinations supported by the terminal device, then performs abstract syntax notation one (ASN. 1) encoding on the band combinations that meet a request and the information that reflects other capabilities of the terminal device, and finally reports an encoded data stream to the network device.

However, because the terminal device supports a very large quantity of band combinations, filtering processing time is relatively long. In addition, the ASN.1 encoding is highly complex and time-consuming. As a result, there is a relatively large latency in a UE capability query process. This affects service establishment time of the terminal device, which affects user experience.

### SUMMARY

This application provides a method and communication apparatus for reporting UE capability information, and a communication system, to help reduce a UE capability reporting latency, thereby improving user experience.

According to a first aspect, this application provides a method for reporting UE capability information. The method includes: receiving a broadcast message from a network device; receiving a first user equipment UE capability query message from the network device; and sending, in response to the first UE capability query message based on a stored first data stream corresponding to a first key value, a UE capability information message that carries the first data stream, where the first data stream is used to represent UE capability information, and the first key value is obtained from the first UE capability query message and/or the broadcast message.

Herein, the first data stream is obtained after UE capability information corresponding to the first key value is encoded. A specific encoding manner may include abstract syntax notation one ASN.1 encoding.

According to the method for reporting UE capability information provided in this application, UE stores, through key value learning, one or more key values and data streams obtained after UE capability information corresponding to the key values is encoded, and records correspondences between the stored key values and data streams; or UE prestores, at delivery, key values and data streams corresponding to the key values, so that the UE can directly query the stored key values when reporting UE capability information. If the UE can find a matched key value, the UE directly reports a stored data stream corresponding to the matched key value to the network device without performing a complex and time-consuming process such as filtering and encoding, thereby helping reduce a latency of reporting the UE capability information.

The reported UE capability information may be carried in a UE capability information (UE Capability Information) message, that is, the first data stream may be sent by using the UE capability information (UE Capability Information) message.

In addition, the UE capability information is usually reported when the UE enters a connected state from an idle state. Therefore, due to the reduction in the reporting latency, a connection can be quickly established between the UE and the network device, and a service can be quickly established, thereby improving user experience.

In addition, if the UE stores un-encoded UE capability information, for example, stores a list of all band combinations and a plmn band combination list, because there are many PLMNs, and the list of all the band combinations and the plmn band combination list are uncompressed information obtained before encoding, relatively large storage space needs to be occupied. In the solution in this application, the UE stores an encoded data stream, and compared with storing information obtained before encoding, the encoded data stream occupies less storage space, so that storage overheads can be reduced.

With reference to the first aspect, in some implementations of the first aspect, the first key value is a parameter set, and a parameter included in the parameter set is any one of the following: a public land mobile network PLMN, a country code of the PLMN, one or more bands that the network device requests to query, a combination of the PLMN and the country code, a combination of the PLMN and the bands that the network device requests to query, or a combination of the country code and the bands that the network device requests to query.

Herein, the parameter or the parameter combination included in the parameter set is merely used as an example, and another possible parameter or parameter combination may be alternatively used.

It should be noted that the first key value is used as an example herein. Any other key value (for example, the following second key value) in this specification is similar to the first key value, and may be any one of the foregoing possible parameter sets. To avoid repetition, the possible parameter sets are not listed one by one again.

With reference to the first aspect, in some implementations of the first aspect, the UE capability information corresponding to the first key value includes a carrier aggregation CA-type band combination supported by the terminal device, the CA-type band combination corresponds to a long term evolution LTE network standard or a new radio NR network standard, and the terminal device works in the long term evolution LTE network standard or the new radio NR network standard.

With reference to the first aspect, in some implementations of the first aspect, the UE capability information corresponding to the first key value includes a dual connectivity DC-type band combination supported by the terminal device, the DC-type band combination includes a multi-radio access technology dual connectivity MRDC-type band combination, the MRDC-type band combination corresponds to a long term evolution advanced LTE-A network standard, and the terminal device works in the long term evolution advanced LTE-A network standard.

It should be noted that, in different network standards, the UE may support different types of band combinations. For example, in LTE, LTE-A, and NR, the UE widely uses a CA technology or a DC technology. Therefore, a band combination supported by the UE includes the CA-type band combination and/or the DC-type band combination. Optionally, in LTE-A, the DC-type band combination may be specifically the MRDC-type band combination.

With reference to the first aspect, in some implementations of the first aspect, the first data stream is prestored by the terminal device at delivery. The terminal device may read the prestored first data stream to report the UE capability information, thereby reducing computing overheads of the terminal device.

Alternatively, the first data stream may be stored in a terminal device system upgrading or updating process.

With reference to the first aspect, in some implementations of the first aspect, the first data stream is stored by the terminal device based on one time of reporting the UE capability information of the first key value, where the time of reporting the UE capability information of the first key value is performed before the terminal device receives the first UE capability query message from the network device.

It should be understood that "the time of reporting the UE capability information of the first key value" herein is "a time" of reporting the UE capability information of the first key value performed before the UE receives the first UE capability query message. In other words, the time of reporting needs to be performed before the UE capability query message is received, and the UE capability information corresponding to the first key value needs to be reported to the network device in the time of reporting. In this way, the UE can store, by learning the first key value, the first data stream obtained after the UE capability information corresponding to the first key value is encoded, so that the UE can directly report the stored first data stream when the UE capability information corresponding to the first key value needs to be reported subsequently, thereby reducing a reporting latency.

With reference to the first aspect, in some implementations of the first aspect, the method further includes: receiving a second UE capability query message from the network device; when determining that a second key value does not exist in one or more stored key values, obtaining UE capability information corresponding to the second key value, and encoding the UE capability information corresponding to the second key value, to obtain a second data stream, where the second key value is obtained from the second UE capability query message and/or a broadcast message; sending the second data stream in response to the second UE capability query message; storing the second data stream, and recording a correspondence between the second data stream and the second key value; receiving a third UE capability query message from the network device; and sending, in response to the third UE capability query message, the second data stream based on the stored second data stream corresponding to the second key value, where the second data stream corresponds to the UE capability information corresponding to the second key value, and the second key value is obtained from the third UE capability query message and/or a broadcast message.

Herein, when the UE finds that the second key value that matches the second UE capability query message does not exist in the stored key values, the UE obtains the UE capability information corresponding to the second key value, and encodes the UE capability information corresponding to the second key value, to obtain the second data stream. The UE stores the second data stream and the correspondence between the second data stream and the second key value. When the UE capability information corresponding to the second key value needs to be reported next time, the UE may directly report, based on the stored correspondence between the second key value and the second data stream, the second data stream corresponding to the second key value. This process is a process in which the UE learns the key value.

In addition, it should be understood that when the UE receives the second UE capability query message from the network device, the second key value is obtained from the second UE capability query message and/or the broadcast message; and when the UE receives the third UE capability query message from the network device, the second key value is obtained from the third UE capability query message and/or the broadcast message. In other words, in the two times of UE capability query described herein, the UE needs to report UE capability information corresponding to a same key value. Although the UE needs to report the UE capability information corresponding to the second key value in both the two reporting processes, the second key value is obtained respectively from UE capability query messages and/or broadcast messages in the two corresponding reporting processes.

With reference to the first aspect, in some implementations of the first aspect, the terminal device prestores one key value and a data stream corresponding to the key value, and the method further includes: discarding the first data stream, the first key value, and a correspondence between the first data stream and the first key value.

In this embodiment, if a newly entered key value is generated, or the UE learns a new key value, the UE overwrites the first key value and the first data stream with the newly entered key value and a data stream obtained after UE capability information corresponding to the newly entered key value is encoded, for example, overwrites the first data stream and the first key value with the second data stream and the second key value. This implementation is particularly applicable to a scenario in which storage space of the UE is limited, and the storage space of the UE can keep storing only one key value and a data stream corresponding to the key value. This helps to reduce a latency in reporting a UE capability by the UE, and further imposes a relatively low requirement for the storage space of the UE, so that storage overheads can be reduced.

With reference to the first aspect, in some implementations of the first aspect, the terminal device stores a plurality of key values and data streams corresponding to the key values, and the method further includes: discarding a key value that is first stored in a time sequence, a data stream corresponding to the key value, and a correspondence between the key value and the data stream.

In this embodiment, the UE may store the plurality of key values and the data streams corresponding to the plurality of key values. If the UE learns a new key value, the UE may update the stored key values by using an aging principle. When a new key value is entered, the UE overwrites a key value stored earlier and a data stream corresponding to the key value with the new key value and a data stream obtained after UE capability information corresponding to the new key value is encoded, to keep a quantity of key values stored in storage space unchanged. Use of the aging principle helps adapt to changes of a PLMN on which the UE camps and a capability supported by the UE, so that a stored key value and a data stream corresponding to the key value can keep a relatively high matching degree with a capability supported by the UE.

With reference to the first aspect, in some implementations of the first aspect, the first data stream, the first key value, and the correspondence between the first data stream and the first key value are stored in a nonvolatile memory.

In the foregoing embodiments, a key value learned by the UE, a data stream corresponding to the key value, and a correspondence between the key value and the data stream are all stored in the nonvolatile memory, so that the stored information is not easily lost.

Optionally, the nonvolatile memory herein may be a read-only memory ROM, a flash (that is, a flash memory), or the like.

With reference to the first aspect, in some implementations of the first aspect, the first data stream, the first key value, and the correspondence between the first data stream and the first key value are stored in a volatile memory, such as a double data rate synchronous dynamic random access memory (DDR SDRAM).

It should be understood that, compared with nonvolatile storage space, an encoded data stream stored in volatile storage space may be lost after power-off. However, a reporting latency can be reduced when the volatile memory is not powered off or when re-encoding is not needed for reporting other than the first time of reporting performed after the volatile memory is powered on.

It should be understood that the DDR SDRAM is merely used as an example, and any other volatile memory is applicable. This is not limited in this application.

It should be noted that, in the foregoing embodiments, the first key value and the first data stream corresponding to the first key value that are stored by the UE are not limited to being stored in a key value learning manner, and are alternatively prestored by the UE at delivery.

According to a second aspect, this application provides a method for reporting UE capability information.

The method includes: receiving a fourth UE capability query message from a network device; encoding, in response to the fourth UE capability query message, prestored UE capability information corresponding to a third key value, to obtain a third data stream, where the third key value is obtained from the fourth UE capability query message and/or a broadcast message; storing the third data stream and the third key value, and recording a correspondence between the third key value and the third data stream; receiving a fifth UE capability query message from the network device; and sending, in response to the fifth UE capability query message, the third data stream to the network device based on the stored third data stream corresponding to the third key value, where the third key value is obtained from the fifth UE capability query message and/or a broadcast message.

In this application, the following is considered: When UE is not upgraded, a capability supported by the UE changes at a small scale. For example, in a period of time, non-band-combination UE capability information, a list of all band combinations, a plmn band list, and a plmn band combination list that are stored by the UE usually do not change. In this case, regardless of whether the list of all the band combinations supported by the terminal device or a plmn band combination list recorded based on a PLMN is filtered by using the plmn band list or a band that the network device requests to query, one or several fixed groups are basically obtained as filtering results . In addition, usually, countries or network operators to which the UE belongs do not frequently change or do not change in a large range, and are usually of a limited quantity. For these reasons, the terminal device generates one or several fixed types of to-be-reported UE capability information within a specific time range. Therefore, the UE prestores, at delivery, UE capability information corresponding to one or more fixed key values. When receiving a UE capability query message delivered by the network device, the UE may directly query the prestored key values. If the UE can find a matched key value, the UE directly encodes UE capability information corresponding to the key value that matches the UE capability query message, and then reports an encoded data stream. Because a filtering processing latency can be omitted, only encoding processing is performed when a UE capability needs to be reported. Therefore, this also helps reduce a latency of reporting the UE capability.

The methods in any one of the first aspect or the possible implementations of the first aspect, and the second aspect may be performed by a terminal device, or may be performed by a chip or an integrated circuit. This is not limited in this application.

Optionally, the chip may be a baseband chip installed on the terminal device, or may be integrated as a part of the baseband chip. Similarly, the integrated circuit may also be the baseband chip or a part of the baseband chip.

According to a third aspect, this application provides a communication apparatus. The communication apparatus has a function of implementing the method in any one of the first aspect or the possible implementations of the first aspect, or has a function of implementing the method in the second aspect. The function may be implemented by hardware, or may be implemented by hardware executing corresponding software. The hardware or the software includes one or more units corresponding to the function.

According to a fourth aspect, this application provides a terminal device, including a processor and a memory. The memory is configured to store a computer program, and the processor is configured to invoke and run the computer program stored in the memory, to enable the terminal device to perform the method in any one of the first aspect or the possible implementations of the first aspect, or have a function of implementing the method in the second aspect.

According to a fifth aspect, this application provides a computer-readable storage medium. The computer-readable storage medium stores computer instructions. When the computer instructions run on a computer, the computer is enabled to perform the method in any one of the first aspect or the possible implementations of the first aspect, or perform the method in the second aspect.

According to a sixth aspect, this application provides a chip, including a processor. The processor is configured to read and execute a computer program stored in a memory, to perform the method in any one of the first aspect or the possible implementations of the first aspect, or perform the method in the second aspect.

Optionally, the chip further includes a memory, and the processor is connected to the memory through a circuit or a wire.

Further, optionally, the chip further includes a communication interface.

According to a seventh aspect, this application provides a computer program product. The computer program product includes computer program code. When the computer program code is run on a computer, the computer is enabled to perform the method in any one of the first aspect or the possible implementations of the first aspect, or perform the method in the second aspect.

According to an eighth aspect, this application provides a communication system, including a network device and the communication apparatus according to the third aspect.

### BRIEF DESCRIPTION OF DRAWINGS

FIG. 1 is a diagram of an architecture of a communication system according to an embodiment of this application.
FIG. 2 is a schematic flowchart of a method for reporting UE capability information according to an embodiment of this application;
FIG. 3 is another schematic flowchart of reporting UE capability information according to an embodiment of this application;
FIG. 4 is still another schematic flowchart of reporting UE capability information according to an embodiment of this application;
FIG. 5 is still another schematic flowchart of reporting UE capability information according to an embodiment of this application;
FIG. 6 is still another schematic flowchart of reporting UE capability information according to an embodiment of this application;
FIG. 7 is still another schematic flowchart of reporting UE capability information according to an embodiment of this application;
FIG. 8 is a schematic diagram of a structure of a communication apparatus 800 according to an embodiment of this application;
FIG. 9 is a schematic diagram of a structure of a processing apparatus according to an embodiment of this application; and
FIG. 10 is a schematic diagram of a structure of a terminal device according to an embodiment of this application.

### DESCRIPTION OF EMBODIMENTS

The following describes technical solutions of this application with reference to accompanying drawings.

The technical solutions in embodiments of this application may be applied to various communication systems, such as a long term evolution (LTE) system, a long term evolution advanced pro (LTE-A pro) system, an LTE frequency division duplex (FDD) system, an LTE time division duplex (TDD) system, a universal mobile telecommunications system (UMTS), a worldwide interoperability for microwave access (WiMAX) communication system, a new radio (NR) communication system, and a future communication system.

A terminal device in the embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a vehiclemounted device, a wearable device, a terminal device in a future 5G network, a terminal device in a future evolved public land mobile communication network (public land mobile network, PLMN), or the like. This is not limited in the embodiments of this application.

In the embodiments of this application, the network device may be any device having a wireless transceiver function. The network device includes but is not limited to an evolved NodeB (eNB), a radio network controller (RNC), a NodeB (NB), a base station controller (BSC), a base transceiver station (BTS), a home base station (a home evolved NodeB or a home NodeB, HNB), a baseband unit (BBU), an access point (AP) in a wireless fidelity (WI-FI) system, a wireless relay node, a wireless backhaul node, a transmission point (TP), a transmission and reception point (TRP), or the like; may be a gNB or a transmission point (TRP or TP) in a 5th generation (5G) system, or one antenna panel or one group of antenna panels (including a plurality of antenna panels) of a base station in a 5G system; or may be a network node serving as a gNB or a transmission point, such as a baseband unit (BBU) or a distributed unit (DU).

In some deployments, the gNB may include a centralized unit (CU) and a distributed unit (DU). The gNB may further include an active antenna unit (AAU). The CU implements some functions of the gNB, and the DU implements some functions of the gNB. For example, the CU is responsible for processing a non-real-time protocol and a service, to implement functions of a radio resource control (RRC) layer and a packet data convergence protocol (PDCP) layer. The DU is responsible for processing a physical layer protocol and a real-time service, and implements functions of a radio link control (RLC) layer, a media access control (MAC) layer, and a physical (PHY) layer. The AAU implements some processing functions of the physical layer, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered to be sent by the DU or by the DU and the AAU.

It may be understood that the network device may be a device including one or more of the CU, the DU, and the AAU. In addition, the CU may be a network device in an access network (RAN), or may be a network device in a core network (CN). This is not limited in this application.

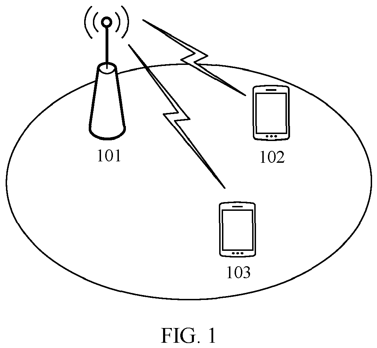

FIG. 1 is a diagram of an architecture of a communication system according to an embodiment of this application. FIG. 1 is applicable to this embodiment of this application. As shown in FIG. 1, the wireless communication system may include at least one network device 101, and the network device 101 communicates with one or more terminal devices (for example, a terminal device 102 and a terminal device 103 shown in FIG. 1) by using a wireless communication technology. During downlink transmission, the network device is a transmit end, and the terminal device is a receive end. During uplink transmission, the terminal device is a transmit end, and the network device is a receive end.

It should be understood that FIG. 1 shows merely an example, and the communication system may include one or more network devices and one or more terminal devices. This is not limited herein.

The following describes a method for reporting UE capability information provided in this application.

The technical solutions of this application are applied to a scenario in which a terminal device reports a capability of the terminal device to a network device in a process in which the terminal device accesses a network from an idle state.

For ease of understanding, related concepts in this application are first described briefly.

In the technical solutions of this application, a key value is predefined, and may specifically depend on a UE implementation, or may be derived based on a standard protocol. The key value may be a parameter; or may be a combination of two or more parameters, or one key value corresponds to one parameter set.

Optionally, the key value may be predefined as any one of the following parameters or any combination of these parameters: a public land mobile network (PLMN) accessed by a terminal device, a country code carried in the PLMN, and a band that a network device requests to query (referred to as a requested band below).

For example, the key value may be defined as the PLMN, the country code, or the requested band. Alternatively, the key value may be predefined as a combination of the PLMN and the requested band (PLMN + requested band), a combination of the country code and the requested band, a combination of the PLMN, the requested band, and other information, or the like.

Based on a predefined key value, when the network device queries UE capability information from the terminal device, the network device sends a UE capability query request to the terminal device. The UE capability query request may carry one or more bands that the network device requests to query (that is, requested bands). The terminal device obtains the requested bands from the UE capability query request, and then may determine, with reference to a PLMN and a country code that are obtained by the terminal device from a system broadcast message when the terminal device camps on a cell, UE capability information that needs to be reported to the network device.

Herein, in addition to a band combination supported by the terminal device, the UE capability information may further include one or more items of the following information: a UE type, a UE capability level, an access layer release number, a measurement capability, a band combination capability, an inter-system capability, and the like.

These capability items of the UE typically depend on a configuration of the UE. In the following, information about these capability items is referred to as non-band-combination UE capability information (Non band combination UE capability information, NonBCUE capability information), NonBCUECapInfo for short. Therefore, the UE capability information includes the band combination supported by the UE and the non-band-combination UE capability information.

Usually, if the non-band-combination UE capability information is not upgraded, the information is relatively fixed. Some UE may store a different configuration with a change of a network on which the UE camps or a subscriber identity module (SIM) card.

The foregoing listed capability items included in the UE capability information are merely examples, and the UE capability information may alternatively include other capability items of the UE. This is not limited herein.

In addition, as an implementation, the band combination included in the UE capability information is not limited to a band combination in a CA scenario or a band combination in a DC scenario.

It should be noted that DC herein is not limited to DC in an LTE or NR system, and may be alternatively a multi-radio access technology dual connectivity (MRDC) technology between LTE and NR.

It should be understood that CA or DC is a technology that can provide a higher bandwidth for data transmission, and is widely used in a communication system, for example, widely used in LTE, LTE-A pro, and 5G.

For ease of description, in the following, the band combination in the CA scenario is referred to as a CA band combination, and the band combination in the DC scenario is referred to as a DC band combination.

Usually, the UE stores a set of CA band combinations and/or DC band combinations that are supported by hardware of the UE. This set depends on a hardware capability, a specification, and a configuration of the terminal device. Atypical flagship product that supports global roaming may support hundreds of band combinations. For ease of later description, in the following, a set of all CA band combinations and DC band combinations that are supported by the terminal device is referred to as a list of all band combinations.

In addition, the UE may further store a band list, a CA band combination list, and/or a DC band combination list that correspond/corresponds to a country or an operator. These lists may be preconfigured in the UE at delivery (may be subsequently upgraded or online updated), or may be collected by the terminal device in a running process. In the following, a band list stored by the UE based on a country or a PLMN of an operator is defined as a plmn band list, and a CA band combination list and/or a DC band combination list that are/is stored based on a country or a PLMN is defines as a plmn band combination list.

For example, China Mobile supports a band 39, a band 40, and a band 41. The UE may record, based on a PLMN of China Mobile, bands or CA band combinations that are supported by the UE. Certainly, these band combinations are supported by the hardware of the terminal device.

It should be understood that "a CA band combination list and/or a DC band combination list" in the foregoing may indicate that the UE stores only the CA band combination list, or stores only the DC band combination list, or stores both the CA band combination list and the DC band combination list. In addition, the CA band combination and the DC band combination may be recorded in one list, or may be separately recorded by separately creating lists. This is not limited in this application.

It may be learned from the foregoing description that the UE may store a plurality of lists related to the band combination, for example, the list of all the band combinations, the plmn band list, and the plmn band combination list. In this case, if the UE performs filtering and encoding processing, only when the UE needs to report UE capability information to the network device, on bands or band combinations that are supported by the UE, a filtering and encoding process is very time-consuming, causing a relatively large latency in reporting a capability of UE by the UE. Even if the UE directly reports one or all of the list of all the band combinations, the plmn band list, or the plmn band combination list without performing filtering processing, an encoding process is also very time-consuming. Based on a practice result, time in which the UE processes capability information that needs to be reported may reach a unit of 10 ms. This is almost intolerable for a low-latency communication system.

The filtering processing in this specification is described herein by using an example. It is assumed that the plmn band list includes a band 3, a band 7, and a band 41. Performing filtering processing by using the plmn band list means querying a CA band combination or a DC band combination that includes only any one or any combination of the band 3, the band 7, and the band 41 from the list of all the band combinations or the plmn band combination list.

For example, for CA, a plurality of types of CA band combinations are included, for example, intra-band (band) continuous CA, intra-band discontinuous CA, and inter-band CA (also referred to as cross-band CA). The cross-band CA may include a case of crossing two bands, three bands, or four bands based on the specification of the UE.

For example, for two complete bands: a band 1 (downlink 2110 MHz to 2170 MHz) and a band 3 (downlink 1805 MHz to 1880 MHz), a CA type defined in a protocol includes the following:
1. CA_1C, two-carrier continuous CA with a maximum bandwidth of 40 M in the band 1;
2. CA_1A-1A, two-carrier discontinuous CA with a maximum bandwidth of 40 M in the band 1;
3. CA_3B, continuous CA with a maximum bandwidth of 10 M in the band 3;
4. CA 3 C, two-carrier continuous CA with a maximum bandwidth of 40 M in the band 3;
5. CA_3A-3A, two-carrier discontinuous CA with a maximum bandwidth of 40 M in the band 3;
6. CA_1A-3A, two-carrier cross-band CA with a maximum bandwidth of 40 M in the band 1 and the band 3;
7. CA_1A-1A-3A: three-carrier cross-band CA with a maximum bandwidth of 60 M in the band 1 and the band 3, where two carriers in the band 1 are discontinuous;
8. CA_1A-3A-3A: three-carrier cross-band CA with a maximum bandwidth of 60 M in the band 1 and the band 3, where two carriers in the band 3 are discontinuous;
9. CA_1A-3C: three-carrier cross-band CA with a maximum bandwidth of 60 M in the band 1 and the band 3, where two carriers in the band 3 are continuous; and
10. CA_1A-1A-3C: four-carrier cross-band CA with a maximum bandwidth of 80 M in the band 1 and the band 3, where two carriers in the band 1 are discontinuous and two carriers in the band 3 are continuous.

In addition, for the foregoing cross-band CA, different combinations are further obtained through classification based on different primary component carriers.

It may be learned that the terminal device supports a very large quantity of bands, and therefore the terminal device also supports a very large quantity of band combinations. Especially, when the terminal device has a relatively high specification, the terminal device supports a very large quantity of CA band combinations and DC band combinations. Therefore, filtering processing is very time-consuming.

In addition, in an existing UE capability information reporting procedure, to achieve a relatively high compression ratio, filtered UE capability information is basically encoded in a compact encoding manner. The encoding manner is referred to as abstract syntax notation one (ASN.1). However, ASN.1 saves an air interface resource at the cost of relatively complex encoding processing.

In conclusion, after receiving a UE capability query message from the network device, the UE first needs to know a capability that needs to be reported to the network device, where the capability includes a capability of the terminal device to support a band combination. Then, the UE obtains the information, and then performs ASN. 1 encoding, to obtain an encoded data stream. Finally, the UE reports the data stream to the network device. However, in a process in which the UE obtains the information, one or all of the list of all the band combinations, the plmn band list, or the plmn band combination list may be read, or encoding may need to be performed after filtering processing. Because the list of the band combinations supported by the terminal device is very large, and both the filtering processing and the encoding are relatively time-consuming, a relatively large reporting latency is caused. It should be understood that, in the embodiments of this application, the UE may report the data stream to the network device by using a UE capability information (UE Capability Information) message.

The inventor of this application finds that, when the UE is not upgraded, the foregoing non band combination UE capability information (that is, NonBCUECapInfo) usually does not change. Even if NonBCUECapInfo of some UE may change with a network on which the UE camps or an SIM card installed in the UE, the change is small-scale, that is, the change lasts for a period of time.

In addition, when the UE is not upgraded, the list of all the band combinations, the plmn band list, and the plmn band combination list usually also do not change (except a case in which some bands or CA band combinations are configured in an abnormal scenario). In this case, regardless of whether the list of all the band combinations supported by the terminal device or a plmn band combination list recorded based on a PLMN is filtered by using the plmn band list or a band that the network device requests to query, one or several fixed groups of filtering results are basically obtained.

For example, when the list of all the band combinations supported by the terminal device does not change, assuming that an operator supports an LTE band 3 or band 5 in a network of the operator, a UE capability query message sent by the network device may include only the following several cases: carrying no requested band, carrying only the band 3, carrying only the band 5, and carrying both the band 3 and the band 5. Therefore, the UE finally generates several determined types of to-be-reported UE capability information.

In addition, usually, countries or network operators to which the UE belongs do not frequently change or do not change in a large range, and are usually of a limited quantity.

For the foregoing plurality of reasons, the terminal device reports one or several fixed types of UE capability information within a specific time range. Therefore, one or several fixed data streams are obtained after ASN.1 encoding.

In view of this, this application provides a method for reporting UE capability information, to help reduce a latency of reporting UE capability information by UE to a network device.

In the technical solutions of this application, UE learns a key value in a process of reporting UE capability information. If the UE needs to report, to a network device, UE capability information corresponding to a key value that is entered for the first time, when obtaining the corresponding UE capability information based on the entered key value and completing encoding and reporting, the UE stores an encoded data stream and the entered key value and records a correspondence between the newly recorded key value and the encoded data stream. Therefore, when the UE capability information corresponding to the newly entered key value is not reported for the first time, the stored data stream may be directly reported, thereby helping reduce a reporting latency.

Alternatively, the correspondence in this specification may also be expressed as a mapping relationship.

It should be understood that the correspondence in the embodiments of this application may be stored or recorded by using a function relationship, a table, a mapping relationship, or the like.

It should be understood that the newly entered key value in this specification means that for the UE, the UE capability information corresponding to the key value is not previously reported by the terminal device to the network device.

Alternatively, at delivery, the UE prestores key values and data streams obtained after UE capability information corresponding to the prestored key values is encoded, and records correspondences between the prestored key values and data streams. When the network device requests the UE to report UE capability information, the UE queries the prestored key values. If the UE can find a matched key value, the UE may directly report a prestored data stream. In this way, a reporting latency can also be reduced in the manner in which the UE prestores the key values and the encoded data streams at delivery.

The following describes several specific implementations as examples for description.

### Manner 1

The UE does not prestore, at delivery, a key value or a data stream corresponding to the key value.

The UE receives a UE capability query message from the network device. The UE determines, based on the UE capability query message and a predefined key value, that UE capability information corresponding to a first key value needs to be reported to the network device. The UE obtains the UE capability information corresponding to the first key value, and encodes the UE capability information corresponding to the first key value, to obtain an encoded data stream (denoted as a first data stream below). The UE reports the first data stream to the network device. In addition, the UE stores the first key value and the first data stream, and records a correspondence between the first key value and the first data stream.

When the UE receives a UE capability query message from the network device again, if the UE determines that a newly entered key value is the first key value, the UE directly reports the stored first data stream to the network device. If the UE determines that a newly entered key value is different from the first key value, the UE obtains UE capability information corresponding to the newly entered key value, and encodes the UE capability information corresponding to the newly entered key value; and then reports an encoded data stream to the network device.

Based on a specific implementation of the UE, the UE may permanently store one or more key values and data streams corresponding to the one or more key values.

(1) The UE stores only one key value and a data stream obtained after a UE capability corresponding to the key value is encoded.

In the manner 1, if a newly entered key value is generated, the UE overwrites the first key value and the first data stream with the newly entered key value and a data stream obtained after UE capability information corresponding to the newly entered key value is encoded.

The manner 1 is mainly applicable to a scenario in which storage space of the UE is limited. It may be understood that, because the terminal device has one or several fixed types of UE capability information within a specific time range, one or several fixed data streams are generated after a UE capability is encoded. Although only one key value and a data stream corresponding to the key value are stored, the encoded data stream does not change within a specific time range. Therefore, when the UE needs to report capability information of the UE, the UE may directly report the stored data stream, to reduce a latency.

(2) The UE stores several key values and data streams obtained after UE capability information respectively corresponding to the several key values is encoded.

In this manner, the UE may store a plurality of key values and data streams obtained after UE capability information respectively corresponding to the plurality of key values is encoded, and record correspondences between the several key values and the several data streams.

If a newly entered key value is generated, the UE directly discards, instead of storing, the newly entered key value and a data stream corresponding to the newly entered key value. Alternatively, the UE may overwrite, according to an aging principle, the first stored key value and a data stream corresponding to the first stored key value with the newly entered key value and the data stream corresponding to the newly entered key value.

It is assumed that a predefined key value is a combination of a PLMN and a requested band. The UE stores, in a time sequence through key value learning, the following four key values and data streams corresponding to the four key values, and records correspondences between the key values and the data streams:
a key value 1 {plmn1, requestedband1}, a data stream 1;
a key value 2 {plmn1, requestedband2}, a data stream 2;
a key value 3 {plmn2, requestedband3}, a data stream 3; and
a key value 4 {plmn3, requestedband4}, a data stream 4.

During one time of UE capability information reporting, if the UE determines that UE capability information corresponding to a key value 5 {plmn1, requestedband5} needs to be reported to the network device, the UE queries the stored four key values, but finds no matched key value. In this case, the UE obtains the UE capability information corresponding to the key value 5, and encodes the UE capability information corresponding to the key value 5, to obtain an encoded data stream (denoted as a data stream 5).

In an implementation, after reporting the data stream 5 to the network device, the UE discards, instead of storing, the key value 5 and the data stream 5. In another implementation, the UE overwrites the first stored key value 1 and data stream 1 with the key value 5 and the data stream 5.

It should be understood that, in the implementation (2), the UE dynamically keeps, through key value learning, one or several key values and data streams obtained after UE capability information corresponding to the one or more key values is encoded.

### Manner 2

At delivery, the UE prestores one or more key values and data streams obtained after UE capability information corresponding to the one or more key values is encoded, and records correspondences between the prestored key values and data streams corresponding to the key values.

For example, the UE directly prestores, at delivery based on a main serving region or an operator of the UE, one or several key values and data streams obtained after UE capability information corresponding to the one or several key values is encoded. If the UE receives a UE capability query message from the network device, the UE directly searches the prestored key values. If the UE finds a matched key value, the UE directly reports a corresponding data stream.

However, if the UE finds no matched key value, the UE needs to encode UE capability information and then report an encoded data stream.

### Manner 3

At delivery of the UE, the UE prestores one or more key values and data streams corresponding to the one or more key values, and records correspondences between the prestored key values and data streams. In addition, when reporting UE capability information to a network side, the UE learns a key value, stores the newly entered key value and a data stream obtained after the UE capability information corresponding to the newly entered key value is encoded, and records a correspondence between the newly entered key value and the data stream.

### Manner 4

Through UE system upgrading, the UE may prestore one or more key values and data streams corresponding to the one or more key values, and record correspondences between the prestored key values and data streams. In addition, when reporting UE capability information to a network side, the UE learns a key value, stores the newly entered key value and a data stream obtained after the UE capability information corresponding to the newly entered key value is encoded, and records a correspondence between the newly entered key value and the data stream.

### Manner 5

Through UE system upgrading, the UE may prestore one or more key values and data streams corresponding to the one or more key values, and record correspondences between the prestored key values and data streams. If the UE receives a UE capability query message from the network device, the UE directly searches the prestored key values. If the UE finds a matched key value, the UE directly reports a corresponding data stream. If the UE finds no matched key value, the UE needs to encode UE capability information and then report an encoded data stream.

It may be understood that, in the manner 4 and the manner 5, through system upgrading, the UE may add or perform replacement with a newly prestored key value and data stream corresponding to the key value, and record a correspondence between the prestored key value and data stream. The manners 1 to 5 may be randomly combined for extension. This is not limited in this application. For example, at delivery of the UE, the UE prestores one or more key values and data streams corresponding to the one or more key values, and records correspondences between the prestored key values and data streams; and through system upgrading, the UE may add or perform replacement with a newly prestored key value and data stream corresponding to the key value, and record a correspondence between the prestored key value and data stream.

In the foregoing embodiments, the UE may store a learned key value, a data stream corresponding to the learned key value, and a correspondence between the key value and the data stream in nonvolatile storage space.

Optionally, the nonvolatile storage space in this application may be storage space of any one of the following nonvolatile memories: a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), and a flash (flash).

In another implementation, the UE may alternatively store a learned key value, a data stream corresponding to the learned key value, and a correspondence between the key value and the data stream in volatile storage space.

However, compared with the nonvolatile storage space, an encoded data stream stored in the volatile storage space may be lost after power-off. Therefore, a re-encoding process is necessarily performed in the first time of UE capability reporting performed after each time of power-on. However, a reporting latency can be reduced when a volatile memory is not powered off or when re-encoding is not needed for reporting other than the first time of reporting performed after the volatile memory is powered on.

Similarly, the volatile storage space may be storage space of any one of the following volatile memories: a random access memory (random access memory, RAM), such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

In the technical solutions of this application, through key value learning or at delivery, the UE prestores key values and encoded data streams, and records correspondences between the stored key values and encoded data streams, so that when reporting UE capability information, the UE can directly query the stored key values. If the UE can find a matched key value, the UE directly reports a stored data stream to the network device without performing a complex and time-consuming process such as filtering and encoding, thereby helping reduce a latency in reporting the UE capability information by the UE.

In addition, the UE capability information is usually reported when the UE enters a connected state from an idle state. Therefore, due to the reduction in the reporting latency, a connection can be quickly established between the UE and the network device, and a service can be quickly established, thereby improving user experience.

In addition, if the UE stores a list of all band combinations and a plmn band combination list, and performs filtering processing only when receiving a UE capability query message from the network device, because there are many PLMNs, and the list of all the band combinations and the plmn band combination list are uncompressed information obtained before encoding, relatively large storage space needs to be occupied.

In the solutions in this application, the UE stores an encoded data stream and ASN.1 is an encoding manner at a high compression ratio. Therefore, the encoded data stream occupies less storage space, so that storage overheads can be reduced.

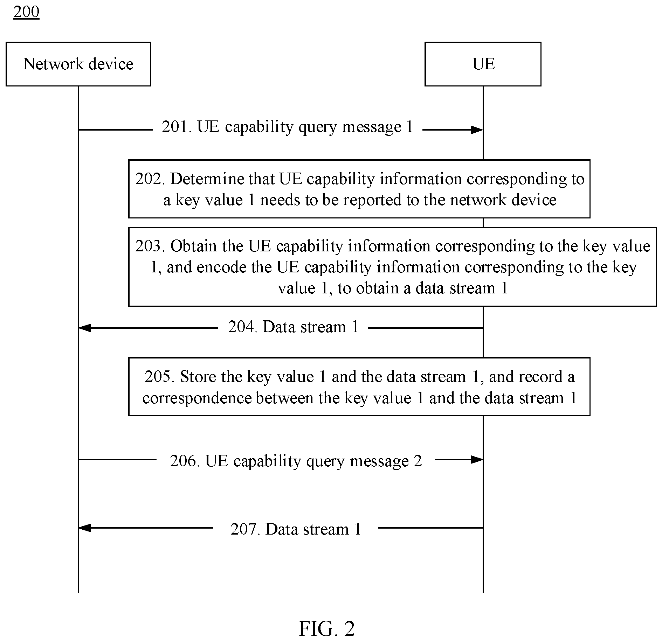

With reference to FIG. 2 to FIG. 7, the following uses examples to describe a procedure of a method for reporting UE capability information provided in this application.

It should be noted that in the following method embodiments, steps are numbered merely for more clearly describing the method for reporting UE capability information provided in this application, and there is no limitation that UE needs to use a same quantity of steps to complete reporting of a capability of the UE. For example, in a specific implementation, when the UE reports the capability of the UE, the UE may perform more steps than those in the following embodiments, or may omit some steps, provided that the UE can complete reporting of the capability of the UE based on a technical concept provided in this application. That is, steps shown in FIG. 2 are not all required for one time of UE capability information reporting.

FIG. 2 is a schematic flowchart of a method for reporting UE capability information according to this application.

It is assumed that a predefined key value is a combination of a PLMN and a requested band.

201. A network device sends a UE capability query message 1 to UE. The UE capability query message 1 carries a requested band.

Correspondingly, the UE receives the UE capability query message 1 from the network device.

202. The UE determines that UE capability information corresponding to a key value 1 needs to be reported to the network device.

The UE obtains the requested band from the UE capability query message 1, and then may know, with reference to a cell broadcast message received by the UE when the UE camps on a cell, a PLMN accessed by the UE. That is, before 201, the UE receives the broadcast message. The broadcast message carries the PLMN and a country code.

Therefore, the UE can know specific values of the PLMN and the requested band. For example, if the PLMN accessed by the UE is plmn1, and the requested band carried in the UE capability query message 1 is requestedband1, a parameter set {plmn1, requestedband1} including plmn1 and requestedband1 is the key value 1 herein. The UE filters all capabilities of the UE by using {plmn1, requestedband1}, so that unique to-be-reported UE capability information, that is, the UE capability information corresponding to the key value 1, can be obtained.

203. The UE obtains the UE capability information corresponding to the key value 1, and encodes the UE capability information corresponding to the key value 1, to obtain a data stream 1.

Specifically, the UE obtains the UE capability information corresponding to the key value 1, that is, the UE filters, by using {plmn1, requestedband1}, all the capabilities supported by the UE, and an obtained result is the UE capability information corresponding to the key value 1. Then, the UE encodes the UE capability information corresponding to the key value 1, to obtain the data stream 1.

Optionally, an encoding manner used herein may be ASN.1 encoding, or may be another encoding manner.

204. The UE reports the data stream 1 to the network device.

205. The UE stores the data stream 1 and the key value 1, and records a correspondence between the data stream 1 and the key value 1.

206. The network device sends a UE capability query message 2 to the UE, where a requested band carried in the UE capability query message 2 is requestedband1.

It should be understood that the UE capability query message 2 represents another time of UE capability query performed after the query corresponding to the UE capability query message 1.

Correspondingly, the UE receives the UE capability query message 2 from the network device.

207. The UE reports, in response to the UE capability query message 2, the data stream 1 corresponding to the key value 1 to the network device based on the stored data stream 1 corresponding to the key value 1.

Herein, that the data stream 1 corresponds to the UE capability information corresponding to the key value 1 means that the data stream 1 is obtained after the UE capability information corresponding to the key value 1 is encoded.

It should be understood that, when the PLMN accessed by the UE does not change, and a list of all band combinations and a plmn band combination list that are stored in the UE do not change, the UE capability information corresponding to the key value 1 also does not change. When receiving the UE capability query message 2, the UE determines, based on the UE capability query message 2 and/or a broadcast message, that the UE capability information corresponding to the key value 1 needs to be reported. The UE queries the stored key value, and finds that the key value 1 is previously learned. Therefore, the UE can directly report the stored data stream 1 to the network device based on the recorded correspondence between the key value 1 and the data stream 1.

The network device can obtain, by decoding the data stream 1, the UE capability information corresponding to the key value 1.

In the procedure shown in FIG. 2, the UE stores, by learning the key value 1, the key value 1 and the data stream 1 obtained after the UE capability information corresponding to the key value 1 is encoded, so that the UE can directly report the stored data stream 1 when the UE needs to report the UE capability information corresponding to the key value 1 again, thereby reducing a reporting latency.

In addition, to compare the two processes in which the UE reports a capability of the UE, in FIG. 2, the two reporting processes are shown in one embodiment. It should be understood that the two reporting processes are decoupled. In other words, for any procedure of reporting UE capability information, only steps 201 to 205 may be included (when no matched key value is found), or only steps 206 and 207 may be included (when a matched key value is found).

According to the embodiment shown in FIG. 2, a person skilled in the art can see a process in which the UE learns a key value. In summary, when the UE receives the UE capability query message 1 from the network device, the UE reports, in response to the UE capability query message 1, the data stream 1 to the network device based on the data stream 1 corresponding to the storage key value 1. The key value 1 is obtained by the UE from the UE capability query message 1 and/or the broadcast message.

After the procedure shown in FIG. 2, a key value and a data stream that are stored in the UE, and a correspondence between the key value and the data stream may be represented as follows:
{plmn1, requestedband1}, the data stream 1.

Optionally, it is assumed that the UE permanently stores one key value and a data stream corresponding to the key value. When a newly entered key value is generated, the UE may overwrite the key value 1 and the data stream 1 of the key value 1 with the newly entered key value and a corresponding data stream.

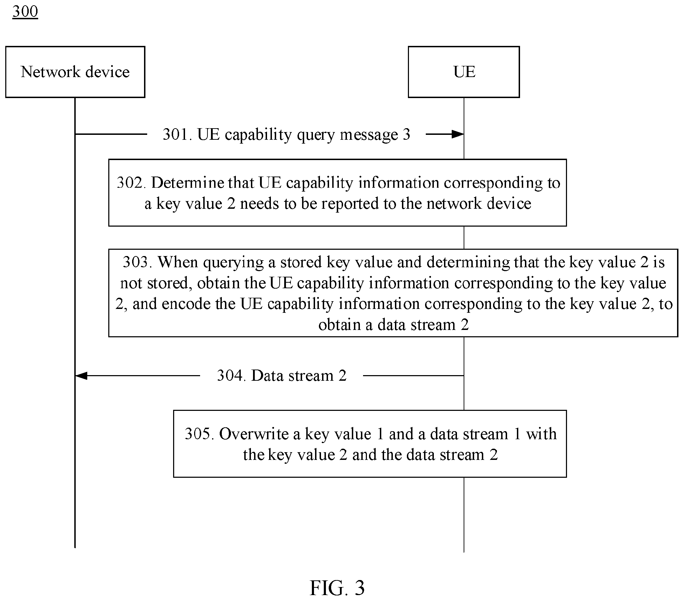

It is assumed that after step 207, another time of UE capability query is shown in FIG. 3.

FIG. 3 shows another example of UE capability information reporting.

301. The network device sends a UE capability query message 3 to the UE. The UE capability query message 3 carries a requested band requestedband2.

Correspondingly, the UE receives the UE capability query message 3 from the network device.

302. The UE determines that UE capability information corresponding to a key value 2 needs to be reported to the network device.

It is assumed that the PLMN accessed by the UE does not change. In this case, a parameter set corresponding to the key value 2 is {plmn1, requestedband2}.

303. When the UE queries the stored key value and finds that the key value 2 is not stored, the UE obtains the UE capability information corresponding to the key value 2, and encodes the UE capability information corresponding to the key value 2, to obtain a data stream 2.

304. The UE reports the data stream 2 to the network device.

305. The UE stores the key value 2 and the data stream 2, and records a correspondence between the key value 2 and the data stream 2. In addition, the UE deletes the key value 1 and the data stream 1, and the correspondence between the key value 1 and the data stream 1.

Herein, the UE stores the key value 2 and the data stream 2, and deletes the key value 1 and the data stream 1. In other words, the UE overwrites the key value 1 and the data stream 1 with the key value 2 and the data stream 2.

In this case, a key value and a data stream that are stored in the UE, and a correspondence between the key value and the data stream may be represented as follows:
{plmn1, requestedband2}, the data stream 2.

In the embodiment shown in FIG. 3, because the UE permanently stores one key value and a data stream corresponding to the key value, when the UE learns a new key value, the UE overwrites a previously stored key value and a data stream of the previously stored key value with the newly learned key value and a data stream corresponding to the newly learned key value.

As described above, when storage space of the UE is limited, only one key value and a data stream corresponding to the key value may be stored. When storage space of the UE is not limited, the UE may store a plurality of key values and data streams corresponding to the plurality of key values.

It should be understood that in the text, a data stream corresponding to a key value is a data stream obtained after UE capability information corresponding to the key value is encoded.

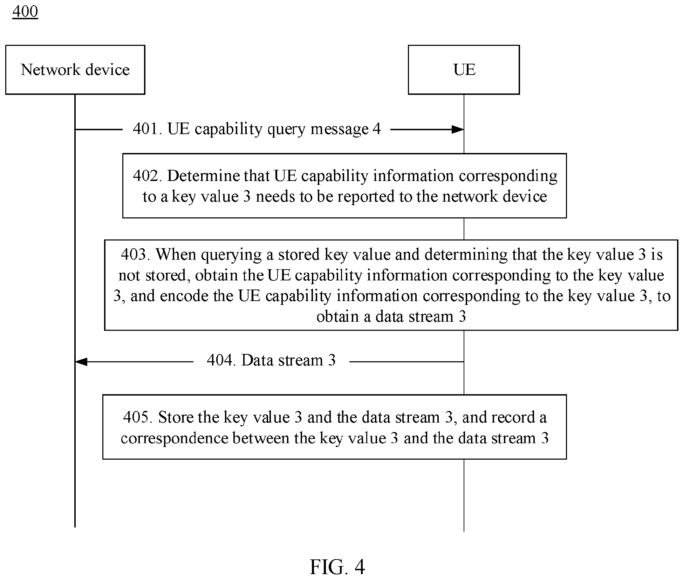

FIG. 4 is still another schematic flowchart of reporting UE capability information according to an embodiment of this application.

401. The network device sends a UE capability query message 4 to the UE. The UE capability query message 4 carries a requested band requestedband3.

Correspondingly, the UE receives the UE capability query message 4 from the network device.

402. The UE determines that UE capability information corresponding to a key value 3 needs to be reported to the network device.

Herein, it is still assumed that the PLMN accessed by the UE does not change. In this case, a parameter set corresponding to the key value 3 is {plmn1, requestedband3}.

403. When the UE queries the stored key value and finds that the key value 3 is not stored, the UE obtains the UE capability information corresponding to the key value 3, and encodes the UE capability information corresponding to the key value 3, to obtain a data stream 3.

404. The UE reports the data stream 3 to the network device.

405. The UE stores the key value 3 and the data stream 3, and records a correspondence between the key value 3 and the data stream 3.

In this case, key values and data streams that are stored in the UE, and correspondences between the key values and the data streams may be represented as follows:
{plmn1, requestedband2}, the data stream 2; and
{plmn1, requestedband3 }, the data stream 3.

It should be noted that only the key value 3 is used as an example for description herein. When the UE can store a plurality of key values, the UE may continuously store learned newly entered key values and data streams corresponding to the learned newly entered key values, until a predefined storing quantity upper limit is reached.

For example, it is assumed that the UE can store a maximum of five key values and data streams corresponding to the five key values. After a plurality of times of learning, it is assumed that key values and data streams that are stored in the UE, and correspondences between the key values and the data streams may be represented as follows:
{plmn1, requestedband2}, the data stream 2;
{plmn1, requestedband3}, the data stream 3;
{plmn2, requestedband2}, a data stream A;
{plmn3, requestedband3}, a data stream B; and
{plmn4, requestedband4}, a data stream C.

It should be understood that the data stream A to the data stream C herein are merely for being distinguished from the data stream 2, the data stream 3, and the like, and have no other meaning.

When a quantity of stored key values reaches the defined quantity upper limit, the UE may discard, instead of continuously storing, a newly entered key value and a data stream corresponding to the newly entered key value.

Alternatively, the UE may overwrite, according to an aging principle, a key value that is first stored in a time sequence and a data stream corresponding to the key value with a newly entered key value and a data stream corresponding to the newly entered key value.

Optionally, in another implementation, the UE may update a stored data stream in another manner other than the aging principle. For example, when the UE camps on a new PLMN, the UE may delete all data streams of an original PLMN that matches an SIM card, and record the new PLMN and a key value entered in the new PLMN and a data stream corresponding to the key value.

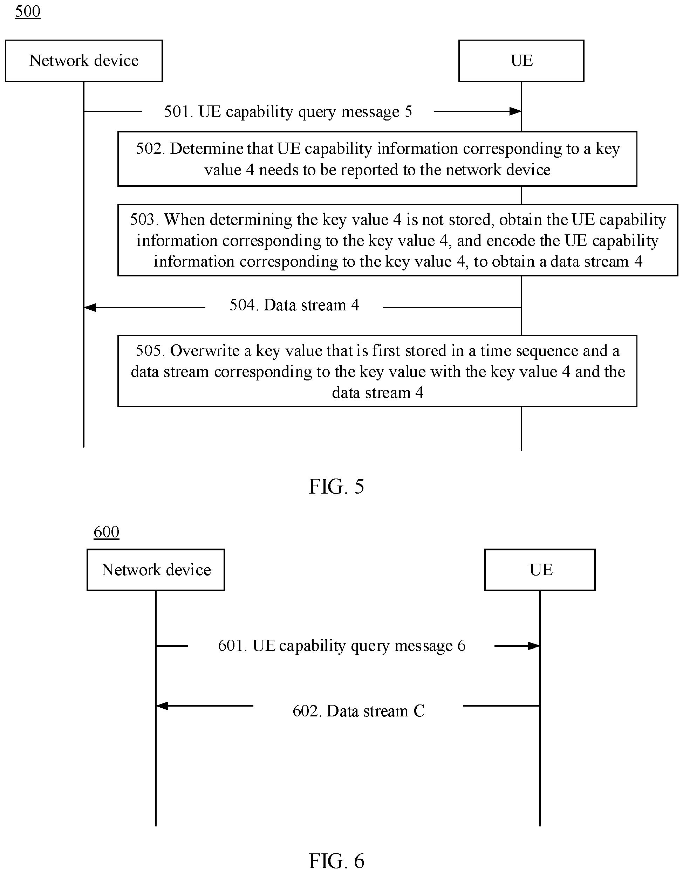

The following describes a process of updating a stored key value according to an aging principle with reference to FIG. 5.

FIG. 5 is still another schematic flowchart of reporting UE capability information according to an embodiment of this application.

501. The UE receives a UE capability query message 5 from the network device.

Optionally, it is assumed that the UE capability message 5 carries no requested band.

502. The UE determines that UE capability information corresponding to a key value 4 needs to be reported to the network device.

The UE obtains a value of a PLMN from a received broadcast message (it is assumed that the value is plmn5), and determines that a parameter set corresponding to the key value 4 is {plmn5}.

503. When determining that the key value 4 is not stored, the UE obtains the UE capability information corresponding to the key value 4, and encodes the UE capability information corresponding to the key value, to obtain a data stream 4.

504. The UE reports the data stream 4 to the network device.

505. The UE overwrites, according to an aging principle, a key value that is first stored in a time sequence and a data stream corresponding to the key value with the key value 4 and the data stream 4.

In addition, the UE records a correspondence between the key value 4 and the data stream 4.

The foregoing example is still used for description. In the time sequence, in the data stream 2, the data stream 3, and the data stream A to the data stream C, the data stream 2 is first stored. Therefore, the UE overwrites the key value 2 and the data stream 2 with the key value 4 and the data stream 4. In this case, key values and data streams that are stored in the UE, and correspondences between the key values and the data streams are changed as follows:
{plmn1, requestedband3 }, the data stream 3;
{plmn2, requestedband2}, the data stream A;
{plmn3, requestedband3}, the data stream B;
{plmn4, requestedband4}, the data stream C; and
{plmn5}, the data stream 4.

If stored key values and data streams are continuously updated according to the aging principle subsequently, sequentially overwritten data streams are data streams A, B, ....

FIG. 2 to FIG. 5 are all examples in which the UE stores, through key value learning, a key value and a data stream corresponding to the key value. As described above, in another implementation, at delivery, UE prestores one or more key values, and prestores data streams obtained after UE capability information corresponding to the one or more key values is encoded. When a network device queries a UE capability, the UE queries the prestored key values. If the UE finds a matched key value, the UE directly reports a data stream corresponding to the key value.

The following provides an example for description with reference to FIG. 6.

It is assumed that at delivery, UE prestores two key values and two data streams obtained after UE capability information corresponding to the two key values is encoded, and records correspondences between the two key values and the two data streams, for example:
{plmn4, requestedband1}, a data stream C; and {plmn2, requestedband2}, a data stream D.

It is assumed that a predefined key value is a combination of a PLMN and a requested band.

FIG. 6 is still another schematic flowchart of reporting UE capability information according to an embodiment of this application.

601. The UE receives a UE capability query message 6 from a network device. The UE capability query message 6 carries a requested band requestedband1.

602. The UE sends the data stream C corresponding to a key value 5 to the network device in response to the UE capability query message 6.

Specifically, the UE obtains requestedband1 from the UE capability query message 6, and determines, based on plmn4 obtained from a cell broadcast message, that UE capability information corresponding to {plmn4, requestedband1} needs to be reported to the network device. {plmn4, requestedband1} is the key value 5.

Further, the UE queries the prestored key values and finds the matched key value {plmn1, requestedband1}; and then directly reports the data stream C to the network device based on the correspondence between the prestored key value and the data stream.

In this embodiment, at delivery, the UE prestores the key values and the data streams corresponding to the key values. When the network device queries a UE capability, the UE can quickly report the UE capability, so that a service can be quickly established, thereby improving user experience.

In the foregoing embodiments shown in FIG. 2 to FIG. 6, the UE stores compressed UE capability information, that is, an encoded data stream.

As described above, when UE is not upgraded, a list of all band combinations supported by the terminal device, a plmn band list, and a plmn band combination list usually do not change. Regardless of whether the list of all the band combinations or the plmn band combination list is filtered by using the plmn band list or a requested band, one or several fixed groups of filtering results are basically obtained.

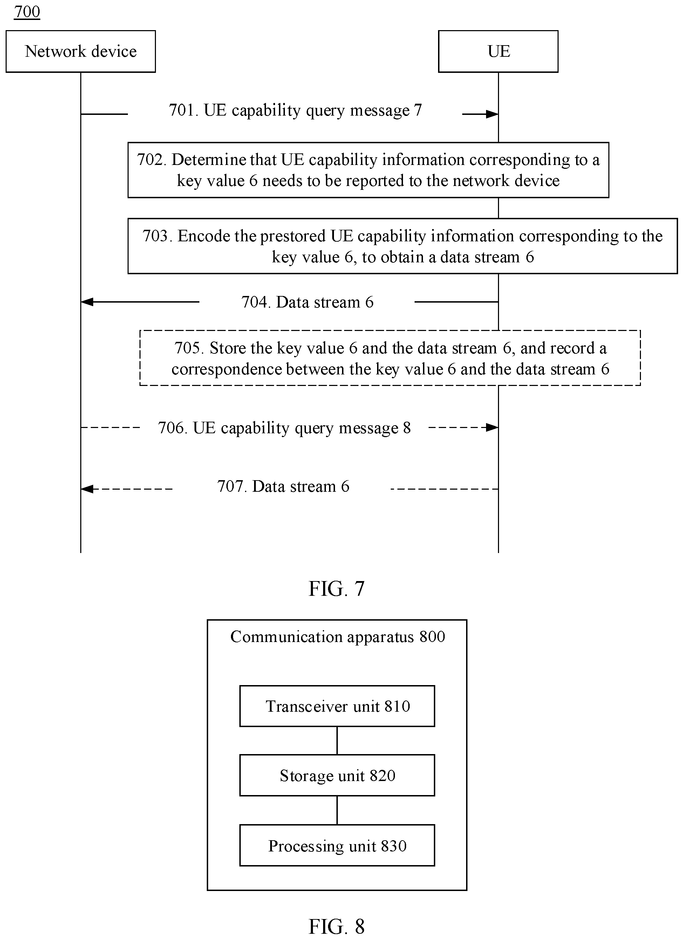

Therefore, in another implementation, the UE prestores the several relatively fixed groups of filtering results, prestores key values corresponding to the several groups of filtering results, and records correspondences between the key values and the several groups of filtering results. When receiving a UE capability query message from a network device, if the UE can find a matched key value, the UE encodes a group of filtering results that corresponds to the matched key value, and then reports an encoded data stream. The following provides an example for description with reference to FIG. 7.

FIG. 7 is still another schematic flowchart of reporting UE capability information according to an embodiment of this application.

701. Receive a UE capability query message 7 from a network device.

702. Determine that UE capability information corresponding to a key value 6 needs to be reported to the network device.

It is assumed that a parameter set corresponding to the key value 6 is {plmn6, requestedband5}.

703. Encode the prestored UE capability information corresponding to the key value 6, to obtain a data stream 6.

The UE queries a prestored key value. If the UE finds the matched key value 6, the UE encodes a group of filtering results that corresponds to the key value 6, to obtain the data stream 6.

704. Report the data stream 6 to the network device.

It may be understood that the UE may store a filtering result obtained before encoding. When the network device queries a UE capability, the UE encodes the filtering result, and then reports an encoded data stream to the network device. In this way, a filtering processing latency can also be omitted, so that only encoding processing is performed when the UE capability needs to be reported. Therefore, a latency can also be reduced.

Optionally, the UE may store the data stream 6 and the key value 6, so that the data stream 6 can be directly reported in a next time of reporting the UE capability information corresponding to the key value 6, as described in the following steps 705 to 708.

705. Store the key value 6 and the data stream 6, and record a correspondence between the key value 6 and the data stream 6.

706. Receive a UE capability query message 8 from the network device.

707. Report, in response to the UE capability query message 8, the stored data stream 6 to the network device based on the stored data stream 6 corresponding to the key value 6.

It should be understood that the UE may determine, based on the UE capability query message 8 and/or a broadcast message, that the UE capability information corresponding to the key value 6 needs to be reported. The UE finds, by querying the stored key value, that the key value 6 is a learned key value. In this case, the UE may directly report the stored data stream 6 corresponding to the key value 6.

In the embodiment shown in FIG. 7, at delivery, the UE prestores UE capability information corresponding to one or more key values, so that the UE can directly query the prestored key values when receiving a UE capability query message delivered by the network device. If the UE can find a matched key value, the UE directly encodes UE capability information corresponding to the key value that matches the UE capability query message, and then reports an encoded data stream. Because a filtering processing latency can be omitted, only encoding processing is performed when a UE capability needs to be reported. Therefore, this also helps reduce a latency of reporting the UE capability.

The foregoing describes in detail the method for reporting UE capability information provided in this application with reference to FIG. 2 to FIG. 7. The following describes communication apparatuses provided in this application.

FIG. 8 is a schematic diagram of a structure of a communication apparatus 800 according to an embodiment of this application. The communication apparatus 800 includes a transceiver unit 810 and a storage unit 820.

The transceiver unit 810 is configured to receive a broadcast message.

The transceiver unit 810 is further configured to receive a first user equipment UE capability query message from a network device.

The transceiver unit 810 is further configured to send, in response to the first UE capability query message based on a first data stream corresponding to a first key value stored in the storage unit 820, the first data stream to the network device.

Optionally, the communication apparatus 800 further includes a processing unit 830.

In an embodiment, the transceiver unit 810 is further configured to receive a second UE capability query message from the network device.

The processing unit 830 is further configured to: determine, based on the second UE capability query message, whether the storage unit 820 stores a second key value; when determining that the storage unit 820 does not store the second key value, obtain UE capability information corresponding to the second key value; and encode the UE capability information, to obtain a second data stream.

The transceiver unit 810 is further configured to send the second data stream.

The storage unit 820 is further configured to store the second data stream, the second key value, and a correspondence between the second data stream and the second key value.

Optionally, in another embodiment, the communication apparatus 800 stores one key value and a data stream corresponding to the key value. The processing unit 830 is further configured to control the storage unit 820 to discard the first data stream, the first key value, and a correspondence between the first data stream and the first key value.

Optionally, in another embodiment, the communication apparatus 800 stores a plurality of key values and data streams corresponding to the plurality of key values. The processing unit 830 is further configured to control the storage unit 820 to discard a key value that is first stored in a time sequence, a data stream corresponding to the key value, and a correspondence between the key value and the data stream.

Optionally, the transceiver unit 810 in the foregoing embodiment may be replaced by a receiving unit and/or a sending unit.

For example, when performing a receiving step, the transceiver unit 810 may be replaced by the receiving unit. When performing a sending step or an output step, the transceiver unit 810 may be replaced by the sending unit.

In an implementation, the communication apparatus 800 may be the terminal device in the method embodiments. Corresponding units included in the communication apparatus 800 are separately configured to perform corresponding operations and/or processing performed by the terminal device in the method embodiments.

For example, the transceiver unit 810 is a transceiver, the storage unit 820 is a memory, and the processing unit 830 may be a processor. The transceiver has a sending and/or receiving function, and the transceiver may also be replaced by a receiver and/or a transmitter.

In another implementation, the communication apparatus 800 may be a chip or an integrated circuit. In this case, the transceiver unit 810 may be a communication interface, and the processing unit 830 may be a logic circuit.

Optionally, the communication interface may be an input/output interface or a transceiver circuit. The input/output interface may include an input interface and an output interface. The transceiver circuit may include an input interface circuit and an output interface circuit.

In an implementation, the processing unit 830 may be a processing apparatus, and some or all functions of the processing apparatus may be implemented by software.

Optionally, some or all functions of the processing apparatus may be implemented by software. In this case, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. A memory configured to store a computer program is located outside the processing apparatus. The processor is connected to the memory by using a circuit/an electric wire, to read and execute the computer program stored in the memory.

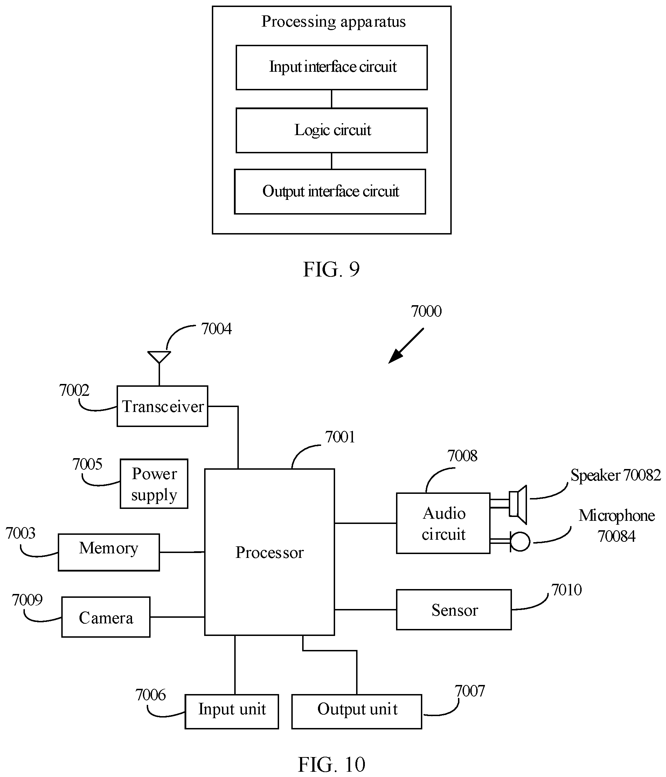

Optionally, some or all functions of the processing apparatus may be implemented by hardware. In this case, the processing apparatus may include an input interface circuit, a logical circuit, and an output interface circuit, as shown in FIG. 9.

FIG. 9 is a schematic diagram of a structure of a processing apparatus according to an embodiment of this application. An input interface circuit is configured to receive a broadcast message and a first UE capability query message. A logic circuit is configured to: determine, based on the broadcast message and/or the first UE capability query message, that UE capability information corresponding to a first key value needs to be reported to a network device; obtain the UE capability information corresponding to the first key value; and encode the UE capability information corresponding to the first key value, to obtain a first data stream. An output interface circuit is configured to output the first data stream.

Further, the output interface circuit outputs the first key value and the first data stream to a memory. The memory stores the first key value and the first data stream, and records a correspondence between the first key value and the first data stream.

When the input interface circuit receives a second UE capability query message, the logic circuit is further configured to determine, based on the second UE capability query message, that UE capability information corresponding to a second key value needs to be reported to the network device. The logic circuit determines whether the memory stores the second key value. When the logic circuit determines that the second key value is not stored in the memory, the logic circuit obtains the UE capability information corresponding to the second key value, and encodes the UE capability information corresponding to the second key value, to obtain a second data stream. The logic circuit is further configured to output the second data stream to a transceiver through the output interface circuit. The transceiver sends the second data stream. In addition, the logic circuit is further configured to output the second data stream and the second key value to the memory, so that the memory stores the second data stream, the second key value, and a correspondence between the second data stream and the second key value.

Further, the input interface circuit is further configured to receive a third UE capability query message. The logic circuit is further configured to query, in response to the third UE capability query message, whether the memory stores the second key value. When the logic circuit determines that the memory stores the second key value, the logic circuit obtains the second data stream corresponding to the second key value from the memory, and outputs the second data stream to the transceiver. The transceiver is further configured to send the second data stream.

Herein, the memory and the transceiver are installed on a terminal device, and work with the processing apparatus to complete UE capability reporting.

Optionally, the memory and the processor may be integrated together, or may be physically independent of each other.

In addition, only a learning process of the second key value is used as an example for description herein. A learning process of another key value in the foregoing method embodiments is similar to that of the second key value. Details are not described herein again.

Optionally, the processing apparatus may be one or more chips, or one or more integrated circuits.

For example, the processing apparatus may be one or more field-programmable gate arrays (FPGAs), application-specific integrated circuits (ASICs), system on chips (SoCs), central processing units (CPUs), network processors (NPs), digital signal processors (DSPs), micro controller units (MCUs), programmable logic devices (PLDs), or other integrated chips, or any combination of the foregoing chips or processors, or the like.

In addition, this application further provides a terminal device. The following describes the terminal device with reference to FIG. 10.

FIG. 10 is a schematic diagram of a structure of a terminal device according to an embodiment of this application. As shown in FIG. 10, the terminal device 7000 includes a processor 7001, a transceiver 7002, and a memory 7003. The processor 7001, the transceiver 7002, and the memory 7003 may communicate with each other through an internal connection path, to transfer a control signal and/or a data signal. The memory 7003 is configured to store a computer program, and the processor 7001 is configured to invoke the computer program from the memory 7003 and run the computer program, to control the transceiver 7002 to receive and send a signal. Optionally, the terminal device 7000 may further include an antenna 7004. The transceiver 7002 transmits or receives a wireless signal by using the antenna.

Optionally, the processor 7001 and the memory 7003 may be integrated into one processing apparatus. The processor 7001 is configured to execute program code stored in the memory 7003 to implement the foregoing functions.

Optionally, the memory 7003 may alternatively be integrated into the processor 7001. Alternatively, the memory 7003 is independent of the processor 7001, in other words, is located outside the processor 7001.

The processor 7001 may be configured to perform actions that are implemented internally by the terminal device and that are described in the foregoing method embodiments. The transceiver 7002 may be configured to perform a receiving or sending action performed by the terminal device, and the memory 7003 is configured to implement a storage function. For example, processing and/or operations performed by the transceiver unit 810 shown in FIG. 8 may be implemented by the transceiver 7002. Processing and/or operations performed by the processing unit 830 may be implemented by the processor 7001 shown in FIG. 10. The storage unit 820 in FIG. 8 may be implemented by the memory 7003. For details, refer to the detailed descriptions of the method embodiments. Details are not described herein again.

Optionally, the terminal device 7000 may further include a power supply 7005, configured to supply power to various devices or circuits in the terminal device.

In addition, to improve functions of the terminal device, the terminal device 7000 may further include one or more of an input unit 7006, a display unit 7007, an audio circuit 7008, a camera 7009, a sensor 7010, and the like. The audio circuit may further include a speaker 70082, a microphone 70084, and the like.

Optionally, the input unit 7006 may be a signal input interface, and the display unit 7007 may also be a signal output interface.

In addition, this application further provides a communication system, including the terminal device in the method embodiments of this application. In addition, the communication system may further include a network device.

This application further provides a computer-readable storage medium. The computer-readable storage medium stores a computer program. When the computer program is executed by a computer, the computer is enabled to perform operations and/or processing performed by the terminal device in any method embodiment.

This application further provides a computer program product. The computer program product includes computer program code. When the computer program code is run on a computer, the computer is enabled to perform operations and/or processing performed by the terminal device in any method embodiment.

This application further provides a chip, and the chip includes a processor. A memory configured to store a computer program is disposed independent of the chip. The processor is configured to execute the computer program stored in the memory, to perform operations and/or processing performed by the terminal device in any method embodiment.

Further, the chip may further include a memory and/or a communication interface. The communication interface may be an input/output interface, an input/output circuit, or the like.

The processor mentioned in the foregoing embodiments may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in the embodiments of this application may be directly executed and completed by using a hardware encoding processor, or may be executed and completed by using a combination of hardware and software modules in the encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

A person of ordinary skill in the art may be aware that, units and algorithm steps in the examples described with reference to the embodiments disclosed in this specification may be implemented by electronic hardware or a combination of computer software and electronic hardware, which specifically depends on a specific application and a design constraint condition of the technical solution. A person skilled in the art may use different methods to implement the described functions for each particular application, but it should not be considered that such an implementation goes beyond the scope of this application.

The units described as separate parts may or may not be physically separate, and parts displayed as units may or may not be physical units, and may be located in one position, or may be distributed on multiple network units. Some or all of the units may be selected depending on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for reporting user equipment UE capability information, comprising:
receiving a broadcast message from a network device;
receiving a first user equipment UE capability query message from the network device; and
sending, in response to the first UE capability query message based on a stored first data stream corresponding to a first key value, a UE capability information message that carries the first data stream, wherein the first data stream is used to represent UE capability information, and the first key value is obtained from the first UE capability query message and/or the broadcast message.

2. The method according to claim 1, wherein the first key value is a parameter set comprising a public land mobile network PLMN and one or more bands, the broadcast message carries the PLMN, and the first UE capability query message carries the bands.

3. The method according to claim 1, wherein the first key value comprises a parameter set comprising a PLMN, a country code, and one or more bands, the broadcast message carries the PLMN and the country code, and the first UE capability query message carries the band.

4. The method according to any one of claims 1 to 3, wherein the first data stream is prestored in a terminal device at delivery.

5. The method according to any one of claims 1 to 3, wherein the first data stream is stored by the terminal device after one time of reporting the UE capability information of the first key value, and the time of reporting the UE capability information of the first key value is performed before the terminal device receives the first UE capability query message from the network device.

6. The method according to any one of claims 1 to 5, wherein the UE capability information comprises a carrier aggregation CA-type band combination supported by the terminal device, and the terminal device works in a long term evolution LTE network standard or a new radio NR network standard.

7. The method according to any one of claims 1 to 5, wherein the UE capability information comprises a dual connectivity DC-type band combination supported by the terminal device, the DC-type band combination comprises a multi-radio access technology dual connectivity MRDC-type band combination, and the terminal device works in a long term evolution advanced LTE-A network standard.

8. The method according to any one of claims 1 to 7, wherein the first data stream, the first key value, and a correspondence between the first data stream and the first key value are stored in a nonvolatile memory.

9. The method according to claim 8, wherein the non-volatile memory comprises a read-only memory ROM and a flash memory.

10. A communication apparatus for reporting user equipment UE capability information, comprising:
a transceiver unit, configured to receive a broadcast message from a network device, wherein
the transceiver unit is further configured to receive a first user equipment UE capability query message from a network device; and
the transceiver unit is further configured to send, in response to the first UE capability query message based on a first data stream corresponding to a first key value stored in the storage unit, a UE capability information message that carries the first data stream, wherein the first data stream is used to represent UE capability information, and the first key value is obtained from the first UE capability query message and/or the broadcast message.

11. The communication apparatus according to claim 10, wherein the first key value is a parameter set comprising a public land mobile network PLMN and one or more bands, the broadcast message includes the PLMN, and the first UE capability query message carries the bands.

12. The communication apparatus according to claim 10, wherein the first key value comprises a parameter set comprising a PLMN, a country code, and one or more bands, the broadcast message carries the PLMN and the country code, and the first UE capability query message carries the band.

13. The communication apparatus according to any one of claims 10 to 12, wherein the first data stream is prestored in the communication apparatus at delivery.

14. The communication apparatus according to any one of claims 10 to 12, wherein the first data stream is stored by the communication apparatus after one time of reporting the UE capability information of the first key value, and the time of reporting the UE capability information of the first key value is performed before the transceiver unit receives the first UE capability query message from the network device.

15. The communication apparatus according to any one of claims 10 to 14, wherein the UE capability information comprises a carrier aggregation CA-type band combination supported by the terminal device, and the terminal device works in a long term evolution LTE network standard or a new radio NR network standard.

16. The communication apparatus according to any one of claims 10 to 14, wherein the UE capability information comprises a dual connectivity DC-type band combination supported by the terminal device, the DC-type band combination comprises a multi-radio access technology dual connectivity MRDC-type band combination, and the terminal device works in a long term evolution advanced LTE-A network standard.

17. The communication apparatus according to any one of claims 10 to 16, wherein the storage unit is a nonvolatile storage space.

18. The communication apparatus according to claim 17, wherein the non-volatile storage space comprises a read-only memory ROM and a flash memory.

19. A computer-readable storage medium, wherein the computer-readable storage medium stores a computer program, and when the computer program is executed by a computer, the computer is enabled to perform the method according to any one of claims 1 to 9.

20. A chip, comprising a communication interface, a memory, and a processor, wherein the memory is configured to store a computer program, and the processor is configured to read and execute the computer program stored in the memory, to perform the method according to any one of claims 1 to 9.

21. A terminal device, comprising a transceiver, a memory, and a processor, wherein the memory is configured to store a computer program, and the processor is configured to read and execute the computer program stored in the memory, to perform the method according to any one of claims 1 to 9.

22. A communication system, comprising the communication apparatus according to any one of claims 10 to 18.
